# EUROPÄISCHE PATENTSCHRIFT

(11) **EP 1 899 634 B1**
(45) Veröffentlichungstag und Bekanntmachung des Hinweises auf die Patenterteilung: **24.08.2011**
(21) Anmeldenummer: 06754595.4
(22) Anmeldetag: 27.06.2006
(51) Int. Cl.: F16K 31/06, F16K 1/18, F16K 1/36, F16K 1/16, F16K 7/16

(54) **VENTILVORRICHTUNG**
VALVE DEVICE
DISPOSITIF A SOUPAPE

(30) Priorität: 27.06.2005 DE 202005010075 U; 28.04.2006 DE 202006006862 U
(43) Veröffentlichungstag der Anmeldung: 19.03.2008
(73) Patentinhaber: Bürkert Werke GmbH, 74653 Ingelfingen (DE)
(72) Erfinder: SCHEIBE, Ralf, 74653 Künzelsau-Garnberg (DE)
(74) Vertreter: Prinz & Partner
(86) Internationale Anmeldenummer: PCT/EP2006/006208
(87) Internationale Veröffentlichungsnummer: WO 2007/000321

(56) Entgegenhaltungen:
- DE-A1- 3 528 072
- DE-U1- 20 009 969
- US-A- 5 799 696
- US-A1- 2003 057 393

## Beschreibung

Die Erfindung betrifft eine Ventilvorrichtung.

Aus dem Stand der Technik sind Ventilvorrichtungen bekannt, bei denen ein Ventilraum mittels eines Dichtkörpers aus elastischem Material gegenüber einem Ventilantrieb abgedichtet ist. Um einen im Ventilraum angeordneten Ventilsitz wahlweise abzudecken oder freizugeben, ist ein zweiarmiger Betätigungshebel vorgesehen, der den Dichtkörper durchragt und dessen erster Arm vom Ventilantrieb betätigt wird. Der zweite Arm des Betätigungshebels steckt in einer an den Dichtkörper angeformten Tasche, die auch den Schließkörper bildet. Bei dem Dichtkörper handelt es sich gewöhnlich um eine Membran, die an ihrem Umfangsrand eingespannt ist und in ihrem Zentrum die in den Ventilraum ragende Tasche aufweist. Bei einer Schwenkbewegung des Betätigungshebels wird die Membran hoch beansprucht, da sie im Bereich um die Tasche herum abwechselnd gedehnt und gestaucht wird.

US 200310057393 A1 offenbart eine Ventilvorrichtung gemäß dem Oberbegriff der unabhängigen Ansprüche. Ein Hebel weist einen Betätigungsarm auf, der an einen Ventilantrieb angeschlossen ist, und einen zweiten Arm, der von einem Schließkörper ummantelt ist, an den ein Dichtkörper angeformt ist. Die Bewegung zum öffnen und Schließen des Dichtsitzes biegt den Hebel an der Verbindung zwischen einem äußeren Dichtungsring und einer Basis. Es gibt keine örtlich fixierte Lagerachse.

DE 35 28 072 A1 offenbart ebenfalls eine Ventilvorrichtung gemäß dem Oberbegriff der unabhängigen Ansprüche. Ein Schließkörper ist an einen Dichtkörper angeformt. Der Schließkörper bildet dabei die Lagerung und ruht in einer schneidenförmig ausgebildeten Lagerausnehmung. Eine bewegliche Lagerung wird durch die elastische Ausbildung des Lagers erreicht, d.h. es handelt sich um eine schwimmende Lagerachse.

US 5,799,696 offenbart eine Ventilvorrichtung mit zweiarmigem Betätigungshebel. Die Lagerung erfolgt zwischen zwei Gehäuselippen. Der Hebel führt eine Schwenkbewegung um diese Lippen aus. Die Dichtung schwimmt zu ihrer Dichtposition, es gibt keine räumlich fixierte Lagerachse.

DE 200 09 969 U1 offenbart eine Ventilvorrichtung mit einem Schließkörper und einem daran angeformten Dichtkörper. Der Betätigungshebel weist drei Arme auf.

Die Erfindung schafft eine Ventilvorrichtung, bei der der Dichtkörper zur Abdichtung zwischen Ventilraum und Ventilantrieb durch die Schwenkbewegung des Betätigungshebels nur wenig verformt wird.

Erfindungsgemäß wird dies durch eine Ventilvorrichtung gemäß Ansprüchen 1 und 15 erreicht, mit einem in einem Gehäuse ausgebildeten Ventilraum, einem gegenüber dem Ventilraum mittels eines Dichtkörpers aus elastischem Material abgedichteten Ventilantrieb, einem zweiarmigen Betätigungshebel, der den Dichtkörper durchragt und dessen erster Arm an den Ventilantrieb angeschlossen ist, und einem an den Dichtkörper angeformten Schließkörper, der eine Ummantelung des zweiten Arms des Betätigungshebels bildet. Dabei kann der Schließkörper durch eine Schwenkbewegung des Betätigungshebels einen im Ventilraum angeordneten Ventilsitz abdecken bzw. freigeben, und der Betätigungshebel weist eine räumlich fixierte Lagerachse auf. Im Gegensatz zu Ventilvorrichtungen nach dem Stand der Technik, bei denen sich die Drehachse für die Schwenkbewegung des Hebels weit oberhalb des Dichtkörpers befindet oder bei der Betätigung des Hebels seine "Lagerachse" im Dichtkörper frei "schwimmt", d.h. sich im Raume bewegt, wird durch die erfindungsgemäße Ausgestaltung die Drehachse in die Ebene des Dichtkörpers, vorzugsweise in deren Mitte, gelegt. Dadurch wird bei der Schwenkbewegung des Hebels eine geringere elastische Verformung des Dichtkörpers im Bereich der Lagerachse erzielt, was eine längere Lebensdauer des Dichtkörpers zur Folge hat.

Vorzugsweise hat der Betätigungshebel zwei einander gegenüberliegende Fortsätze, die sich längs der Lagerachse im Inneren des Dichtkörpers erstrecken. Dabei können sich die Fortsätze über nahezu die gesamte Breite des Dichtkörpers erstrecken; es ist allerdings ebenso möglich, lediglich vergleichsweise kleine Ansätze am Hebel auszubilden. In beiden Fällen dienen die Fortsätze der Fixierung des Hebels im Dichtkörper. Darüber hinaus wird die im Stand der Technik nicht genau definierte Lagerachse durch die Fortsätze festgelegt.

Gemäß der Ausführungsform der Erfindung nach Anspruch 15 weist der Dichtkörper im Bereich der Lagerachse wenigstens ein Formschlußelement auf, das mit einem komplementär ausgebildeten Formschlußelement des Gehäuses in Eingriff steht. Auf diese Weise wird im Bereich der Lagerachse eine formschlüssige Verbindung zwischen dem Dichtkörper und dem Gehäuse geschaffen, die der Fixierung der Lagerachse dient, die somit durch ein Walken des Dichtkörpers nicht mehr verschoben werden kann. Die Fixierung der Lagerachse kann also durch an den Betätigungshebel angeformte Fortsätze oder durch einen Formschluß zwischen Dichtkörper und Gehäuse erfolgen. Natürlich ist auch eine Kombination beider Maßnahmen möglich.

Der Dichtkörper kann im Bereich der Lagerachse mehrere Ausnehmungen aufweisen. Am Gehäuse sind dann entsprechend ausgebildete Vorsprünge vorgesehen, die in die Ausnehmungen des Dichtkörpers eingreifen.

Bei den Ausnehmungen handelt es sich gemäß einer ersten Ausgestaltung um Gräben, die auf der dem Ventilraum abgewandten Seite des Dichtkörpers beidseitig parallel zur Lagerachse verlaufen. Alternativ kann es sich bei den Ausnehmungen um Vertiefungen handeln, die auf der dem Ventilraum abgewandten Seite des Dichtkörpers zu beiden Seiten der Lagerachse angeordnet sind.

Gemäß einer weiteren Ausgestaltung weist der Dichtkörper an zwei einander gegenüberliegenden Seiten, die die Lagerachse schneiden, Einbuchtungen auf, die sich über die gesamte Dicke des Dichtkörpers erstrecken. Der Dichtkörper ist also im Bereich der Lagerachse "schmäler" ausgebildet. Er weist, vom Ventilraum aus gesehen, annähernd die Form einer Sanduhr auf, die für die Fixierung des Hebels sorgt.

Alternativ kann der Dichtkörper im Bereich der Lagerachse wenigstens eine Verdickung aufweisen. Diese greift in eine entsprechende Aussparung im Gehäuse ein und sorgt so für eine formschlüssige Verbindung.

Vorzugsweise ist die Verdickung ein vom Betätigungshebel unterbrochener Wulst, der auf der dem Ventilraum abgewandten Seite des Dichtkörpers längs der Lagerachse verläuft.

Ebenso können zwei Wülste vorgesehen sein, die auf der dem Ventilraum abgewandten Seite des Dichtkörpers beidseitig parallel zur Lagerachse verlaufen, wodurch die Lagerachse fixiert wird.

Eine weitere Ausgestaltung sieht mehrere Noppen vor, die auf der dem Ventilraum abgewandten Seite des Dichtkörpers zu beiden Seiten der Lagerachse angeordnet sind.

Gemäß der Ausführungsform der Erfindung nach Anspruch 1 sind eine Lagerfläche am Gehäuse und zwei am Übergangsbereich der Hebelarme gebildete Lagerschultern vorgesehen, die frei von der Ummantelung und unmittelbar auf der Lagerfläche des Gehäuses abgestützt sind. Somit stützt sich also der metallene Betätigungshebel über die ebenfalls aus Metall bestehenden Lagerschultern direkt an der metallenen Lagerfläche des Gehäuses ab. Dadurch ergibt sich ein definiertes Lager mit einer besonders engen Toleranz. Ein weiterer Vorteil dieser Ausgestaltung besteht darin, daß der Betätigungshebel durch den Innendruck im Ventilraum nicht aus dem Dichtkörper herausgedrückt werden kann. Zudem führen von außen auf den Betätigungshebel wirkende Bewegungskräfte nicht zum Herauswandern des Hebels aus dem Dichtkörper.

Vorzugsweise handelt es sich bei den Lagerschultern um Stufen, und der erste Arm des Betätigungshebels weist eine um die Stufen reduzierte Breite auf. Durch diese Ausgestaltung läßt sich eine besonders geringe Baubreite erreichen, die im wesentlichen durch die Breite des zweiten Arms mit der ihn umgebenden Ummantelung und nicht durch den an den ersten Arm angeschlossenen Ventilantrieb bestimmt wird.

Insbesondere sind die Stufen im wesentlichen linienförmig auf der Lagerfläche des Gehäuses gelagert, wodurch die Lager- bzw. Schwenkachse für den Betätigungshebel besonders exakt definiert wird. Zudem läßt sich auf diese Weise die auftretende Reibung reduzieren.

Gemäß einer bevorzugten Ausgestaltung ist der erste Arm des Betätigungshebels von den Lagerschultern ausgehend zu seinem freien Ende hin verjüngt. Die Verjüngung dient als Einführhilfe sowie als Abdichtung in der Gießform bei der Herstellung des Dichtkörpers durch Umgießen des zweiten Armes.

Vorteilhaft weist der erste Arm des Betätigungshebels an seinem freien Ende eine Gestaltung zur Ankopplung des Ventilantriebs auf. Über diese Gestaltung wird die Bewegungskraft in den Betätigungshebel eingeleitet.

Die Gestaltung bildet vorzugsweise keine Verbreiterung des ersten Hebelarms, wodurch sich eine geringe Baubreite der Ventilvorrichtung ergibt. Außerdem läßt sich ein solcher Betätigungshebel bei der Herstellung des Dichtkörpers einfacher in eine Gießform einlegen.

Insbesondere ist die Gestaltung durch wenigstens einen angeformtem Fortsatz, wenigstens eine Einbuchtung und/oder wenigstens eine innenliegende Aussparung gebildet. Der Ventilantrieb ist dann vorzugsweise derart komplementär zur gewählten Gestaltung ausgebildet, daß sich eine formschlüssige Verbindung herstellen läßt.

In alternativer Ausgestaltung der Erfindung ist eine Ventilvorrichtung vorgesehen, mit einem in einem Gehäuse ausgebildeten Ventilraum, einem gegenüber dem Ventilraum mittels eines Dichtkörpers aus elastischem Material abgedichteten Ventilantrieb, einem zweiarmigen starren Betätigungshebel, der den Dichtkörper durchragt und dessen erster Arm an den Ventilantrieb angeschlossen ist, und einem an den Dichtkörper angeformten Schließkörper, der eine Ummantelung des zweiten Arms des Betätigungshebels bildet. Weiterhin sind ein Lagerbereich am Gehäuse und zwei am Übergangsbereich der Hebelarme gebildete Lagerschultern vorgesehen, die sich in ihrer Längsrichtung im wesentlichen über die gesamte Breite des Betätigungshebels erstrecken sowie frei von der Ummantelung und unmittelbar am Lagerbereich des Gehäuses abgestützt sind, wobei der Schließkörper durch eine Schwenkbewegung des Betätigungshebels um eine parallel zur Längsrichtung der Lagerschultern verlaufende Lagerachse einen im Ventilraum angeordneten Ventilsitz abdecken bzw. freigeben kann. Auch bei dieser Ausgestaltung stützt sich der Betätigungshebel aus Metall über seine Lagerschultern unmittelbar an einem anderen Metallteil ab, nämlich dem Lagerbereich am Gehäuse, wodurch sich ebenfalls eine besonders präzise Lagerung ergibt.

Eine bevorzugte Weiterbildung dieser Ventilvorrichtung sieht vor, daß die Schwenkbewegung abhängig von der Bewegungsrichtung um eine von zwei räumlich fixierten Lagerachsen erfolgt. Dabei verläuft jede der Lagerachsen längs der äußeren Kante einer Lagerschulter.

Eine alternative Ausgestaltung sieht vor, daß die Lagerschultern durch konvex gekrümmte Flächen gebildet werden, die sich an zugeordneten Gegenflächen im Lagerbereich des Gehäuses abstützen. Die Lagerung des Betätigungshebels gleicht also in der Ebene der Schwenkbewegung (senkrecht zur Lager- bzw. Schwenkachse) einer Art zweidimensionalem Kugelgelenk.

Im Falle eines solchen "Kugelgelenks" liegt bevorzugt wieder eine einzige räumlich fixierte Lagerachse vor.

Bei sämtlichen beschriebenen Ausführungsformen ist der Dichtkörper vorzugsweise in Richtung der räumlichen Ausdehnung des Hebels im Gehäuse eingespannt. Dies bedeutet, daß die Kräfte zum Abdichten nach außen (also zum Ventilantrieb hin) in derselben Richtung wie der Hebel verlaufen, weshalb das Lager im Dichtkörper komplett von Dichtkräften entlastet ist. Die Dichtkräfte haben also keinen oder nur geringen Einfluß auf die Beweglichkeit des Hebels im Lager.

Vorteilhaft weist der Dichtkörper auf seiner dem Ventilraum zugewandten Seite zu beiden Seiten des Schließkörpers Ausnehmungen auf. Diese dienen dazu, die zur Betätigung des Hebels benötigte Kraft zu reduzieren, was insbesondere dann wünschenswert ist, wenn der Dichtkörper im Bereich der Lagerachse Verdickungen zur Lagerfixierung aufweist.

Vorzugsweise beträgt die maximale Breite der Ventilvorrichtung in Richtung der Lagerachse 4,5 mm. Die erfindungsgemäße Ventilvorrichtung eignet sich also für verschiedenste Anwendungen, die sogenannte miniaturisierte Ventile erfordern, etwa im Bereich der Medizin oder Chemie.

Weitere Merkmale und Vorteile der Erfindung ergeben sich aus der nachfolgenden Beschreibung mehrerer bevorzugter Ausführungsformen anhand der beigefügten Zeichnung. In dieser zeigen:
- Figur 1 eine Teilschnittansicht einer Ventilvorrichtung gemäß einer ersten Ausführungsform der Erfindung;
- Figur 2 eine vergrößerte Schnittansicht eines Ventilraums der Ventilvorrichtung aus Figur 1;
- die Figuren 3a bis c Perspektivansichten eines Dichtkörpers gemäß einer ersten Ausgestaltung, teilweise im Schnitt;
- die Figuren 4a bis f Perspektivansichten weiterer Ausgestaltungen von Dichtkörpern;
- die Figuren 5a bis c Schnittansichten dreier weiterer Ausgestaltungen von Dichtkörpern der erfindungsgemäßen Ventilvorrichtung;
- Figur 5d eine Perspektivansicht des Dichtkörpers aus Figur 5c;
- Figur 6 eine Teilschnittansicht einer Ventilvorrichtung gemäß einer zweiten Ausführungsform der Erfindung;
- Figur 7 eine Schnittansicht eines Betätigungshebels mit Dichtkörper sowie zugeordneter Lagerfläche, der bei der Ventilvorrichtung aus Figur 6 zum Einsatz kommt;
- Figur 8 einen Schnitt durch den Betätigungshebel mit Dichtkörper und Lagerfläche längs der Linie VIII-VIII in Figur 7;
- Figur 9 eine Perspektivansicht des Betätigungshebels mit Dichtkörper aus Figur 7;
- Figur 10 eine Perspektivansicht eines alternativen Betätigungshebels mit Dichtkörper sowie Lagerfläche, teilweise im Schnitt;
- Figur 11 eine perspektivische Detailansicht eines leicht abgewandelten Betätigungshebels;
- Figur 12 eine Perspektivansicht eines weiteren Betätigungshebels;
- die Figuren 13a bis c Ansichten weiterer Betätigungshebel sowie deren Positionierung in einer Gießform;
- die Figuren 14a bis c Ansichten alternativer Ausgestaltungen des freien Endes des ersten Arms des Betätigungshebels;
- die Figuren 15a bis c schematische Darstellungen verschiedener Ankopplungsmöglichkeiten des ersten Arms des Betätigungshebels an den Ventilantrieb;
- Figur 16 eine schematische Darstellung der Montage einer erfindungsgemäßen Ventilvorrichtung;
- die Figuren 17a und b Perspektivansichten der dem Ventilraum zugewandten Seite des Dichtkörpers, teilweise im Schnitt;
- Figur 18 eine Schnittansicht eines Betätigungshebels mit Dichtkörper sowie Lagerfläche für eine Ventilvorrichtung gemäß einer dritten Ausführungsform;
- Figur 19 einen Schnitt längs der Linie IXX-IXX in Figur 18;
- Figur 20 eine Perspektivansicht des Betätigungshebels aus Figur 18;
- Figur 21 eine Perspektivansicht des Betätigungshebels mit Dichtkörper aus Figur 18; und
- Figur 22 eine Schnittansicht eines Betätigungshebels mit zugeordnetem Lagerbereich, der gegenüber Figur 18 leicht abgewandelt ist.

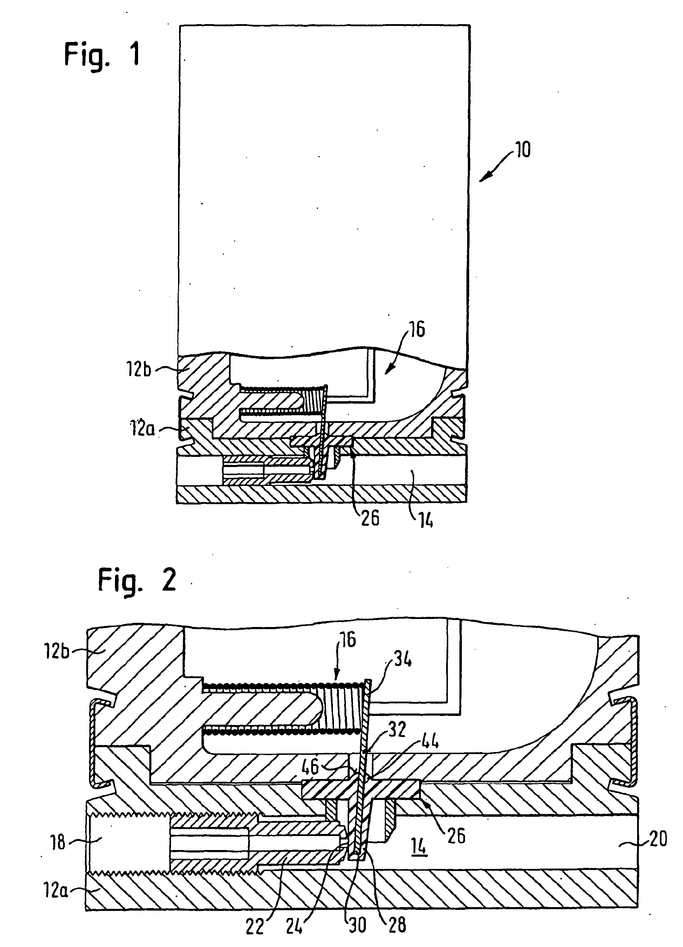

Figur 1 zeigt eine Ventilvorrichtung 10, die ein zweiteiliges Gehäuse 12a, 12b, einen in einem ersten Gehäuseteil 12a ausgebildeten Ventilraum 14 sowie einen in einem zweiten Gehäuseteil 12b angeordneten Ventilantrieb 16 aufweist. Bevorzugt handelt es sich bei der Ventilvorrichtung 10 um ein sogenanntes miniaturisiertes Ventil, das eine besonders geringe Baubreite von weniger als 6 mm, vorzugsweise nur etwa 4,5 mm, aufweist. Der Ventilraum 14 (mit dem ihn umgebenden Gehäuseteil 12a) einerseits und der Ventilantrieb 16 andererseits bilden zwei selbständige, miteinander verbundene Bauteile. Bei dem Ventilantrieb 16 handelt es sich um einen nach dem Klappankerprinzip aufgebauten Magnetantrieb. Es kommen aber auch andere Ventilantriebe in Frage, insbesondere auch Antriebe mit neuartigen Aktoren wie z.B. Piezo- oder MSM-Aktoren.

In den Ventilraum 14 münden zwei Strömungskanäle für ein fluides Medium, von denen einer als Einlaßkanal 18, der andere als Auslaßkanal 20 ausgebildet ist (siehe Figur 2). In den Einlaßkanal 18 ist ein Drehkörper 22 eingeschraubt, der einen Ventilsitz 24 aufweist. Zwischen den Gehäuseteilen 12a, 12b ist ein Dichtkörper 26 aus elastischem Material eingespannt, der den Ventilraum 14 gegenüber dem Ventilantrieb 16 abdichtet und so für eine Medientrennung sorgt.

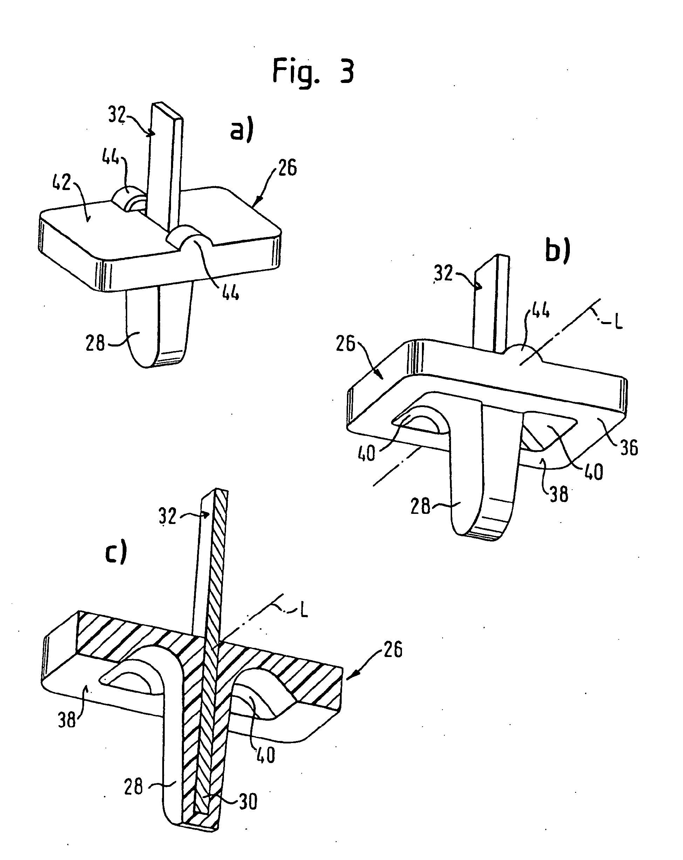

An den in den Figuren 3a bis c gesondert dargestellten, im wesentlichen plattenförmigen Dichtkörper 26 ist ein Schließkörper 28 angeformt, der eine Ummantelung für einen zungenartigen zweiten Arm 30 eines metallenen zweiarmigen Betätigungshebels 32 bildet. Ein erster Arm 34 des Betätigungshebels 32 ist an den Ventilantrieb 16 angeschlossen und kann von diesem betätigt werden. Der Betätigungshebel 32 durchragt den Dichtkörper 26.

Der Dichtkörper 26 gemäß einer ersten Ausgestaltung weist, wie aus den Figuren 3a bis c ersichtlich, einen umlaufenden Dichtrahmen 36 auf, der derart zwischen den Gehäuseteilen 12a, 12b eingespannt ist, daß die zum Abdichten nötigen Kräfte vertikal, also in derselben Richtung wie die räumliche Ausdehnung des Hebels 32, verlaufen. Bei einer Betätigung des Hebels 32 wirkt daher die Hauptkomponente der Antriebskraft weitestgehend senkrecht auf den Betätigungshebel 32 und somit auch senkrecht zur Dichtkraft nach außen. Die zur Medientrennung benötige Dichtkraft hat folglich bei der erfindungsgemäßen Ausgestaltung keinen oder nur geringen Einfluß auf die Beweglichkeit des Hebels 32 im Lager. Da die erfindungsgemäße Ausgestaltung zudem druckausgeglichen ist, zeichnet sie sich im Vergleich zu einseitig druckbeaufschlagten Membranen durch sehr geringe Verstellkräfte aus.

Zu beiden Seiten des Schließkörpers 28 ist zusätzlich auf der dem Ventilraum 14 zugewandten unteren Seite 38 je eine Ausnehmung 40 vorgesehen, durch die die zur Betätigung des Hebels 32 benötigte Kraft weiter reduziert wird. Auf der dem Ventilantrieb 16 zugewandten Seite 42 des Dichtkörpers 26 (in den Figuren die obere Seite) ist ein Formschlußelement in Form eines zweigeteilten Wulstes 44 vorgesehen, der längs einer Lagerachse L des Hebels 32 bezüglich des Dichtkörpers 26 verläuft. Der Wulst 44 greift formschlüssig in eine komplementär ausgestaltete Ausnehmung 46 im Gehäuseteil 12b der Ventilvorrichtung 10 ein. Dadurch wird die sonst "schwimmende" Lagerachse L fixiert.

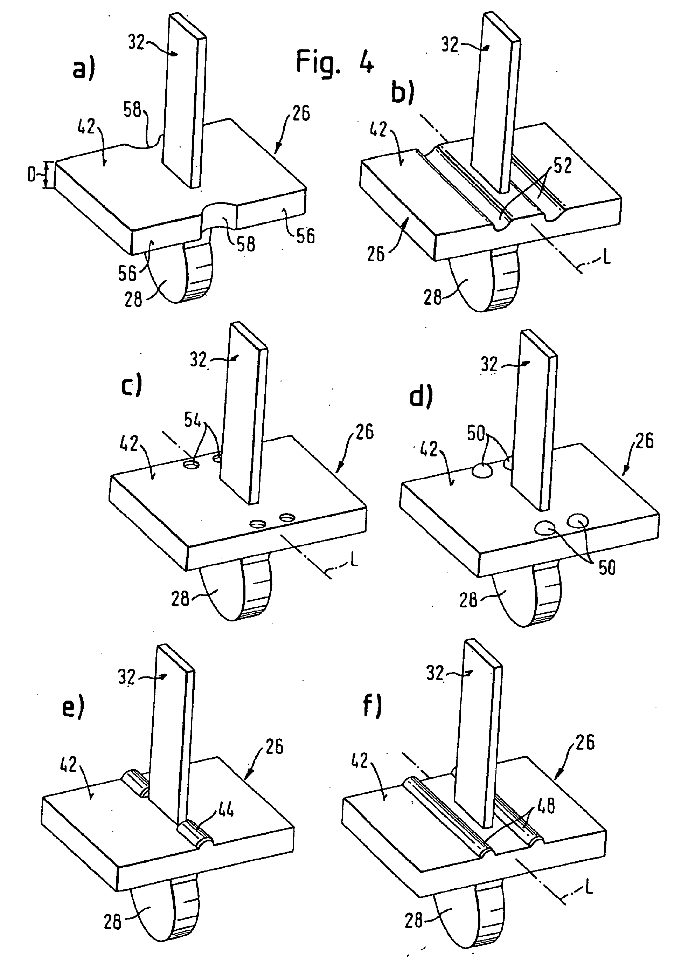

In den Figuren 4a bis f sind alternative Ausgestaltungen des Dichtkörpers 26 gezeigt, die bei der erfindungsgemäßen Ventilvorrichtung 10 zum Einsatz kommen können. Anstelle des zweigeteilten Wulstes 44 (siehe auch Figur 4e) können zwei Wülste 48 vorgesehen sein (Figur 4f), die auf der dem Ventilraum 14 abgewandten Seite 42 zu beiden Seiten des Hebels 32 parallel zur Lagerachse L angeordnet sind. Ebenso möglich ist es, die formschlüssige Verbindung zwischen dem Dichtkörper 26 und dem Gehäuseteil 12b mittels mehrerer auf dem Dichtkörper 26 angeordneter Noppen 50 zu erzielen (siehe Figur 4d).

Natürlich können auch anstelle von Verdickungen in Form von Wülsten oder Noppen am Dichtkörper 26 Ausnehmungen vorgesehen sein, in die entsprechende Vorsprünge des Gehäuseteils 12b eingreifen, um eine formschlüssige Verbindung herzustellen. Bei den Ausnehmungen kann es sich, wie in Figur 4b gezeigt, um zwei beidseitig der Lagerachse L und parallel zu dieser angeordnete Gräben 52 handeln, die auf der dem Ventilraum 14 abgewandten Seite 42 des Dichtkörpers 26 verlaufen. Genauso denkbar ist es, im Bereich der Lagerachse L lochartige Vertiefungen 54 vorzusehen (Figur 4c), in die entsprechend ausgeformte Noppen des Gehäuses eingreifen.

Bei der in der Figur 4a gezeigten Ausführungsform des Dichtkörpers 26 sind an den beiden einander gegenüberliegenden Seiten 56, die von der Lagerachse L geschnitten werden, Einbuchtungen 58 vorgesehen, die sich über die gesamte Dicke D des Dichtkörpers 26 erstrecken. Dadurch weist der Dichtkörper 26 (bei Draufsicht auf die Seite 42) in etwa die Form einer Sanduhr auf.

Alle in den Figuren 4a bis f gezeigten verschiedenen Formgebungen des Dichtkörpers 26 dienen dazu, diesen im Bereich der Lagerachse L formschlüssig mit dem Gehäuse zu koppeln, um ein "Schwimmen" der Lagerachse L im Dichtkörper 26 zu vermeiden. So wird im Betrieb der Ventilvorrichtung 10, wenn der Betätigungshebel 32 zwischen einer Schließstellung, in der der Schließkörper 28 den Ventilsitz 24 abdeckt, und einer Öffnungsstellung, in der der Schließkörper 28 den Ventilsitz 24 freigibt, bewegt wird, verhindert, daß durch ein Walken des Dichtkörpers 26 die Lagerachse L seitlich verschoben wird.

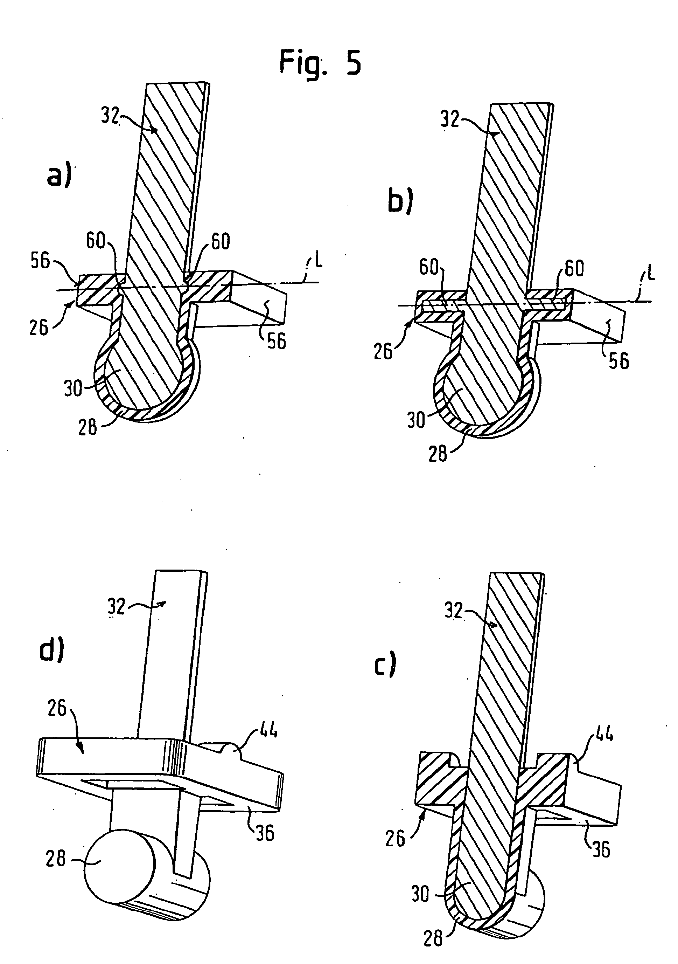

Figur 5a zeigt eine weitere Variante eines Dichtkörpers 26, bei der der Betätigungshebel 32 zu beiden Seiten Fortsätze 60 aufweist, die sich längs der Lagerachse L im Inneren des Dichtkörpers 26 erstrecken. Die Fortsätze 60 können, wie in Figur 5a gezeigt, lediglich kleine Anformungen sein; sie können sich aber auch über nahezu die gesamte Breite des Dichtkörpers 26 erstrecken (Figur 5b). In beiden Fällen dienen die Fortsätze 60 der räumlichen Festlegung der Lagerachse L im Dichtkörper 26. Natürlich kann der Hebel 32 mit den angeformten Fortsätzen 60 gemäß den Figuren 5a und 5b mit jeder der in den Figuren 4a bis f dargestellten Ausgestaltungen des Dichtkörpers 26 kombiniert werden, um eine optimierte Lagerstelle des Hebels 32 im Dichtkörper 26 zu erhalten.

Die Fixierung der Lagerstelle kann jedoch auch ausschließlich durch eine formschlüssige Verbindung zwischen Dichtkörper 26 und Gehäuse erfolgen, ohne daß Anformungen am Betätigungshebel 32 vorhanden sind (siehe Figuren 5c, 5d). Bei der gezeigten Ausgestaltung weist der Schließkörper 28 zylinderförmige Vorsprünge zu beiden Seiten des zweiten Arms 30 auf.

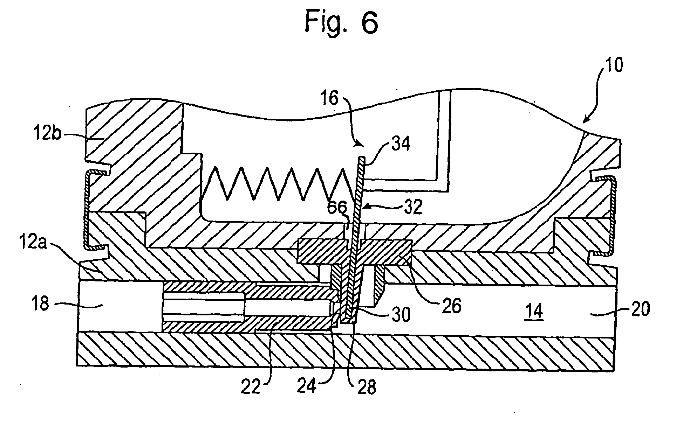

Figur 6 zeigt eine Ventilvorrichtung 10 gemäß einer zweiten Ausführungsform der Erfindung. Im folgenden tragen gleiche oder funktionsgleiche Bauteile gleiche Bezugszeichen, und es wird nur auf die Unterschiede zur bisher beschriebenen Ventilvorrichtung eingegangen. Wie aus Figur 6 ersichtlich ist, weist der Dichtkörper 26 hier kein Formschlußelement zur Fixierung der Lagerstelle auf.

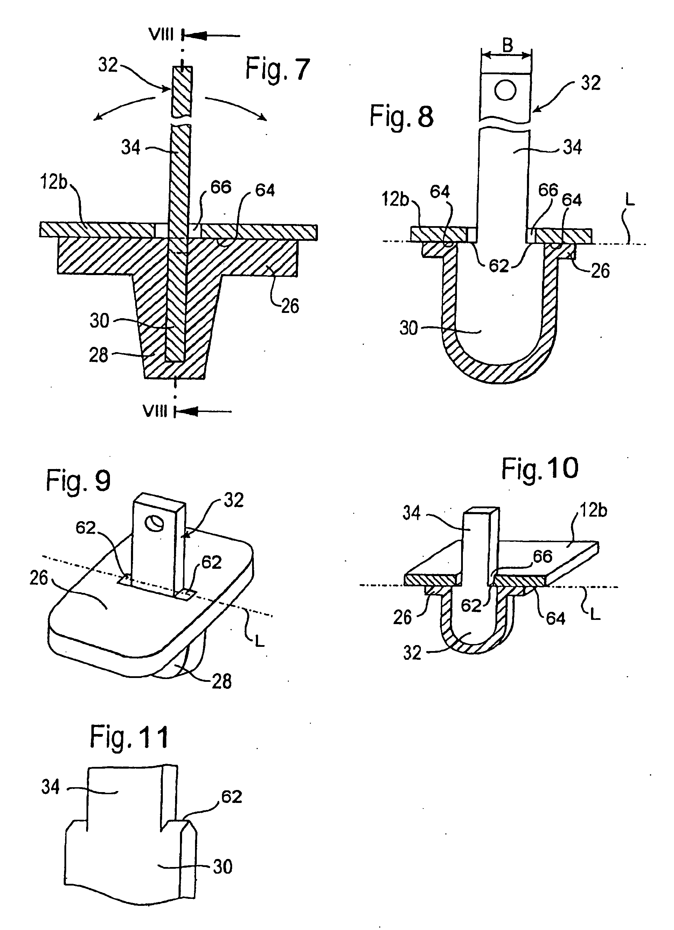

Am Übergangsbereich vom ersten Hebelarm 34 zum zweiten Hebelarm 30 sind zwei Lagerschultern 62 in Form von Stufen gebildet (siehe insbesondere Figur 8), wobei der erste Arm 34 des Betätigungshebels 32 gegenüber dem zweiten Arm 30, der wieder als eine Art Zunge ausgebildet ist, eine um die Stufen reduzierte Breite B aufweist. Wie z.B. aus Figur 9 ersichtlich ist, sind die Lagerschultern 62 frei von der Ummantelung und schließen zum Ventilantrieb 16 hin in etwa bündig mit der Platte des Dichtkörpers 26 ab. Dadurch stützen sich die Lagerschultern 62 unmittelbar auf einer Lagerfläche 64 des Gehäuses, genauer des Gehäuseteils 12b, ab. Das Gehäuseteil 12b weist eine Ausnehmung 66 zur Durchführung des Betätigungshebels 32 auf, die gegenüber den Abmessungen des ersten Arms 34 mit Übermaß ausgeführt ist.

Die Pfeile in Figur 7 deuten die Schwenkbewegung des Betätigungshebels 32 an, was bedeutet, daß die hier feste Schwenk- bzw. Lagerachse L senkrecht zur Zeichenebene (Figur 7) und damit längs der Lagerschultern 62 verläuft, wie auch aus Figur 8 ersichtlich ist. Durch eine Schwenkbewegung des Betätigungshebels 32 kann der Ventilsitz 24 vom Schließkörper 28 abgedeckt bzw. freigegeben werden. Wie bereits erläutert, stützt sich der metallene Betätigungshebel 32 bei der erfindungsgemäßen Ausgestaltung unmittelbar an der ebenfalls metallenen Lagerfläche 64 des Gehäuses ab, wodurch ein definiertes Lager gebildet wird.

Weitere Vorteile der Ausgestaltung mit den Lagerschultern 62 bestehen darin, daß durch die Abstützung der Lagerschultern 62 an der Lagerfläche 64 der Betätigungshebel 32 nicht aufgrund des Innendrucks im Ventilraum 14 herausgedrückt werden kann und auch nicht aufgrund von außen auf den Betätigungshebel 32 wirkender Bewegungskräfte aus dem Dichtkörper 26 herauswandert.

Figur 11 zeigt eine besonders vorteilhafte Ausgestaltung der Lagerschultern 62, die hier nach oben, also zum Ventilantrieb 16 hin, spitz zulaufen, so daß sich eine linienförmige Lagerung auf der Lagerfläche 64 ergibt.

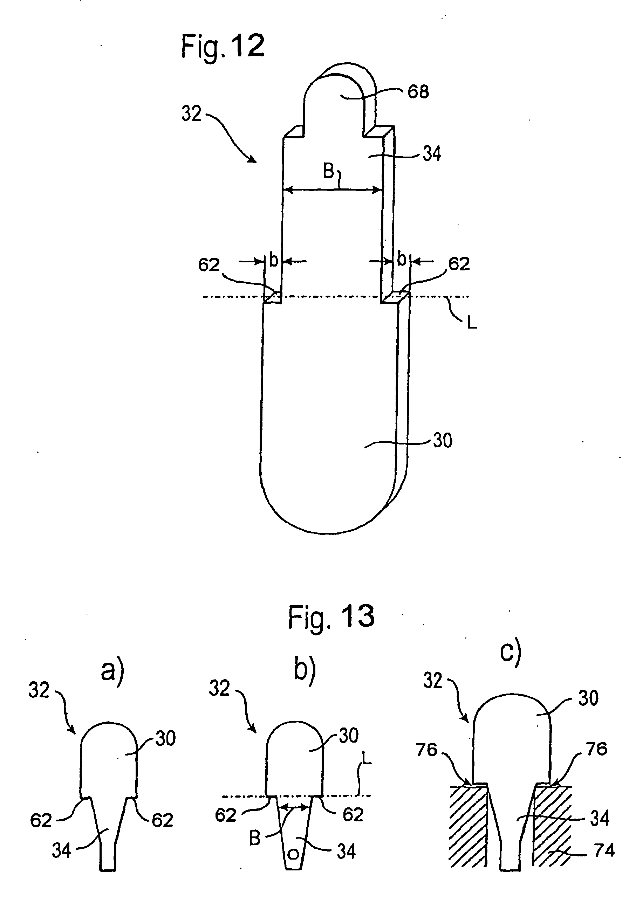

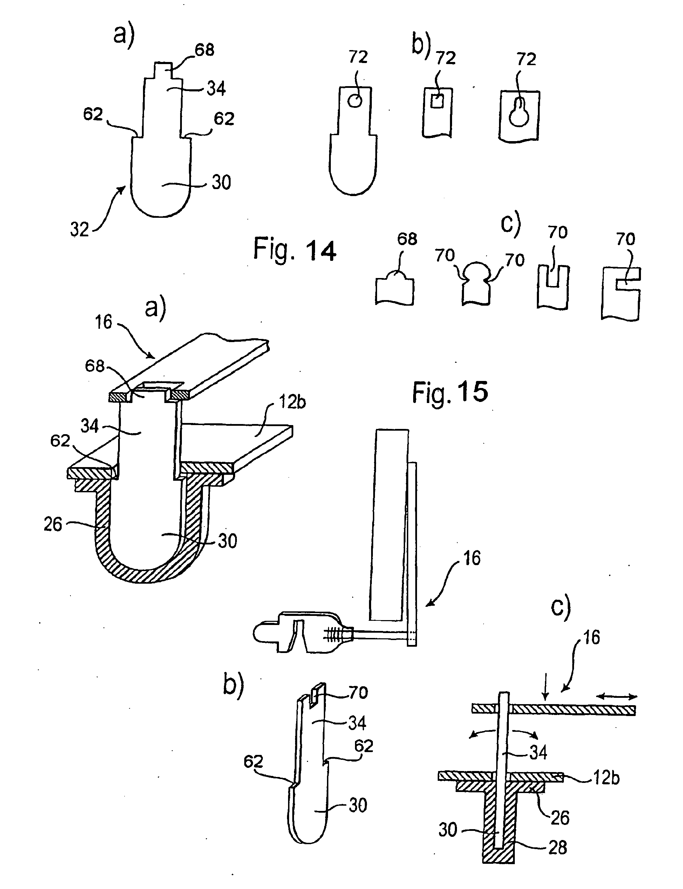

In Figur 12 ist ein einzelner Betätigungshebel 32 dargestellt. Wie gut zu erkennen ist, weist der erste Arm 34 eine um die Breite b der als Stufen ausgebildeten Lagerschultern 62 reduzierte Breite B gegenüber dem zweiten Arm 30 auf. Die Lagerachse L des Betätigungshebels 32 verläuft längs der Lagerschultern 62, genauer gesagt in Richtung deren Breite b. Der Betätigungshebel 32 weist zudem am freien Ende des ersten Armes 34 einen angeformten Fortsatz 68 auf, der eine Gestaltung zur Ankopplung des Ventilantriebs 16 darstellt. Dieser kann, wie hier dargestellt, zum freien Ende hin abgerundet sein, oder, wie in Figur 14a illustriert, eckig. Weitere Möglichkeiten zur Ausbildung der Gestaltung sind in den Figuren 14b und 14c gezeigt. Neben angeformten Fortsätzen 68 kann die Gestaltung durch eine oder mehrere Einbuchtungen 70 oder eine innenliegende Aussparung 72 gebildet sein. Innenliegende Aussparungen sind insbesondere unkritisch gegen Überspritzen. Neben den gezeigten sind zahlreiche weitere Varianten denkbar, wichtig ist vor allem, daß die Gestaltung zur Ankopplung des Ventilantriebs 16 geeignet ist und nach Möglichkeit den ersten Hebelarm 34 nicht verbreitert. Natürlich ist auch ein gänzlicher Verzicht auf eine solche Gestaltung möglich (Figur 10).

Verschiedene Möglichkeiten zur Ankopplung des Ventilantriebs 16 an den ersten Arm 34 sind in den Figuren 15a bis c dargestellt. Dabei ist der in Eingriff mit dem Betätigungshebel 32 stehende Abschnitt des Ventilantriebs 16 jeweils komplementär zum freien Ende des ersten Arms 34 gestaltet.

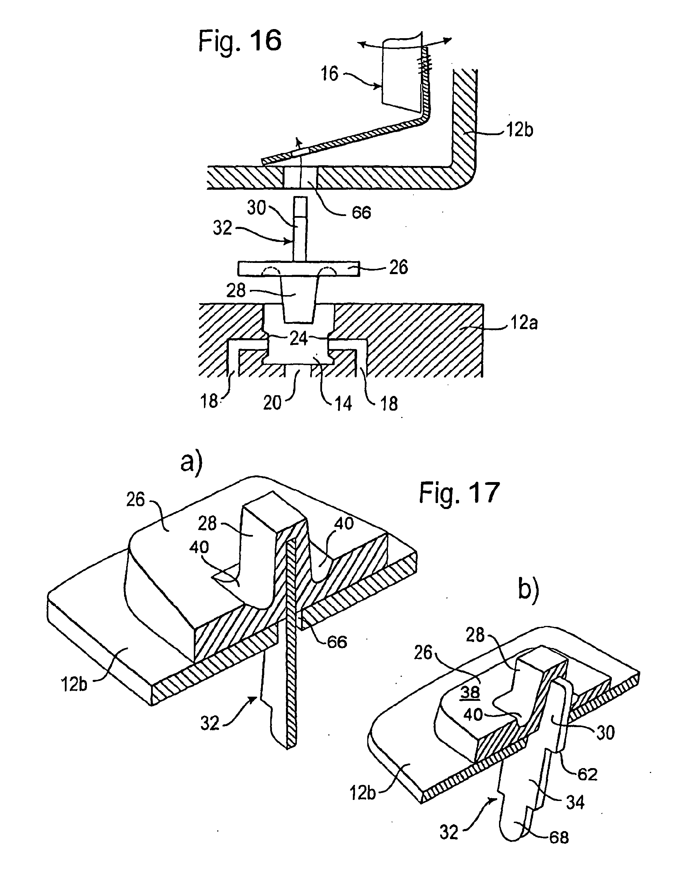

Wie aus Figur 13 hervorgeht, kann sich der erste Arm 34 des Betätigungshebels 32 zudem von den Lagerschultern 62, hier den Stufen, ausgehend zu seinem freien Ende hin verjüngen. Hierzu kann sich die Breite B des ersten Arms 34 über seine gesamte Länge verringern, wie in Figur 13b dargestellt, oder aber die Verjüngung ist auf einen an die Lagerschultern 62 angrenzenden Abschnitt beschränkt (Figur 13a). Die Verjüngung des ersten Arms 34 dient der Abdichtung in einer Gießform 74 bei der Herstellung des Dichtkörpers 26 aus einem Elastomer (Figur 13c). Die Dichtstellen sind mit 76 bezeichnet. Zudem erleichtert diese Gestaltung die Einführung des Betätigungshebels 32 sowohl in die Gießform 74 als auch bei der Montage der Ventilvorrichtung 10 (siehe Figur 16). Diese Figur zeigt eine Ausgestaltung mit zwei Einlaßkanälen 18 und einem gemeinsamen Auslaßkanal 20.

Um die für die Schwenkbewegung des Betätigungshebels 32 benötigte Kraft zu reduzieren, kann der Dichtkörper 26, wie in den Figuren 17a und b gezeigt, auf seiner dem Ventilraum 14 zugewandten Seite 38 zu beiden Seiten des Schließkörpers 28 je eine Ausnehmung 40 aufweisen.

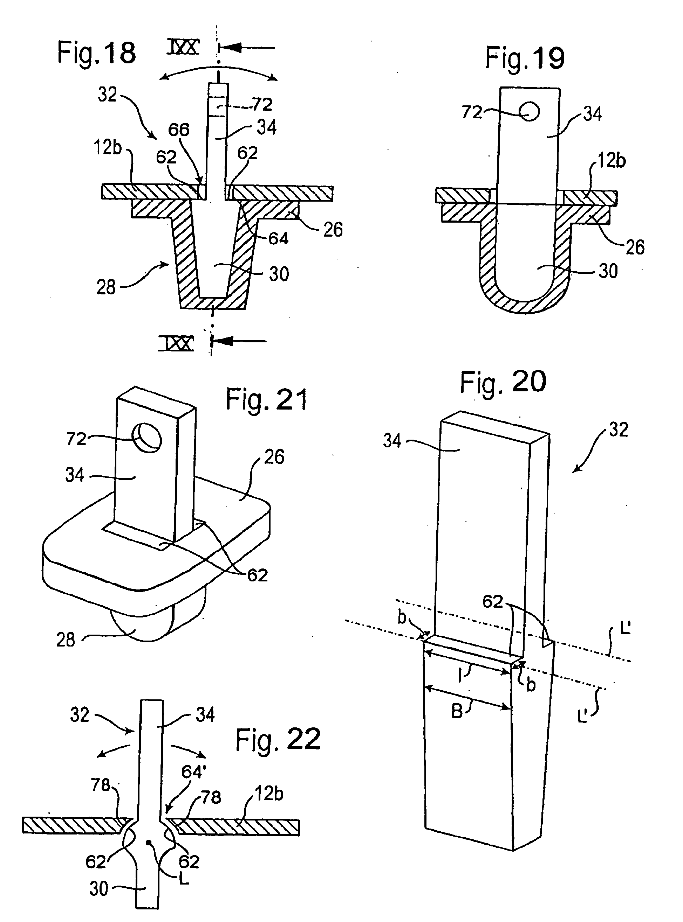

Die Figuren 18 bis 22 schließlich zeigen eine dritte Ausführungsform der erfindungsgemäßen Ventilvorrichtung 10, die sich von der Ventilvorrichtung 10 der Figuren 6 bis 17 hauptsächlich dadurch unterscheidet, daß durch die Lagerschultern 62 eine Verbreiterung des Betätigungshebels 32 in der Schwenkebene erreicht wird, die im Fall der Figur 18 mit der Zeichenebene zusammenfällt. Ausgehend von den Lagerschultern 62, die wiederum als Stufen ausgeführt sind, verjüngt sich der zweite Arm 30 des Betätigungshebels 32 zu seinem freien Ende hin. Wie insbesondere aus Figur 20 ersichtlich ist, erstrecken sich die Lagerschultern 62 in ihrer Längsrichtung I im wesentlichen über die gesamte Breite B des Betätigungshebels 32, und die jeweilige Lagerachse L' verläuft parallel zu dieser Längsrichtung I der Lagerschultern 62. Es ist zu beachten, daß es bei der Ausgestaltung der Figuren 18 bis 21 zwei räumlich fixierte Schwenk- bzw. Lagerachsen L' gibt, je nachdem, in welcher Richtung der Hebel 32 betätigt wird. Die von der Schwenkrichtung des Betätigungshebels 32 abhängige Lagerachse L' fällt dann jeweils mit der äußeren Kante einer Lagerschulter 62 zusammen.

Bei der leicht abgewandelten Ausgestaltung nach Figur 22 sind die Lagerschultern 62 durch konvex gekrümmte Flächen gebildet, die sich an zugeordneten Gegenflächen 78 in einem Lagerbereich 64' des Gehäuses abstützen. Hierdurch ergibt sich eine Art zweidimensionales Kugelgelenk mit einer einzigen, räumlich fixierten Lagerachse L, die senkrecht zur Zeichenebene verläuft: Auf die Darstellung des Dichtkörpers 26 wurde in der Figur 22 aus Gründen der Übersichtlichkeit verzichtet.

Natürlich liegt es im Ermessen des Fachmanns, alle beschriebenen Merkmale der verschiedenen Ausführungsformen sowohl einzeln wie auch in Kombination miteinander einzusetzen.

## Patentansprüche

1. Ventilvorrichtung, mit
einem in einem Gehäuse (12a, 12b) ausgebildeten Ventilraum (14),
einem gegenüber dem Ventilraum (14) mittels eines Dichtkörpers (26) aus elastischem Material abgedichteten Ventilantrieb (16),
einem zweiarmigen Betätigungshebel (32), der den Dichtkörper (26) durchragt und dessen erster Arm (34) an den Ventilantrieb (16) angeschlossen ist, und
einem an den Dichtkörper (26) angeformten Schließkörper (28), der eine Ummantelung des zweiten Arms (30) des Betätigungshebels (32) bildet,
wobei der Schließkörper (28) durch eine Schwenkbewegung des Betätigungshebels (32) einen im Ventilraum (14) angeordneten Ventilsitz (24) abdecken bzw. freigeben kann,
wobei der Betätigungshebel (32) eine räumlich fixierte Lagerachse (L) aufweist,
**dadurch gekennzeichnet, daß** eine Lagerfläche (64) am Gehäuse (12a, 12b) und zwei am Übergangsbereich der Hebelarme (30, 34) gebildete Lagerschultern (62) vorgesehen sind, die frei von der Ummantelung und unmittelbar auf der Lagerfläche (64) des Gehäuses (12a, 12b) abgestützt sind.

2. Ventilvorrichtung nach Anspruch 1, **dadurch gekennzeichnet, daß** es sich bei den Lagerschultern (62) um Stufen handelt und der erste Arm (34) des Betätigungshebels (32) eine um die Stufen reduzierte Breite (B) gegenüber dem zweiten Arm (30) aufweist.

3. Ventilvorrichtung nach Anspruch 2, **dadurch gekennzeichnet, daß** die Stufen im wesentlichen linienförmig auf der Lagerfläche (64) des Gehäuses (12a, 12b) gelagert sind.

4. Ventilvorrichtung nach einem der Ansprüche 1 bis 3, **dadurch gekennzeichnet, daß** der erste Arm (34) des Betätigungshébels (32) von den Lagerschultern (62) ausgehend zu seinem freien Ende hin verjüngt ist.

5. Ventilvorrichtung nach einem der vorhergehenden Ansprüche, **dadurch gekennzeichnet, daß** der erste Arm (34) des Betätigungshebels (32) an seinem freien Ende eine Gestaltung zur Ankopplung des Ventilantriebs (16) aufweist.

6. Ventilvorrichtung nach Anspruch 5, **dadurch gekennzeichnet, daß** die Gestaltung keine Verbreiterung des ersten Hebelarms (34) bildet.

7. Ventilvorrichtung nach Anspruch 5 oder 6, **dadurch gekennzeichnet, daß** die Gestaltung durch wenigstens eines der folgenden Elemente gebildet ist:
- angeformter Fortsatz (68),
- Einbuchtung (70),
- innenliegende Aussparung (72).

8. Ventilvorrichtung nach Anspruch 1, **dadurch gekennzeichnet, daß**
die zwei am Übergangsbereich der Hebelarme (30, 34) gebildeten Lagerschultern (62) sich in ihrer Längsrichtung (I) im wesentlichen über die gesamte Breite (B) des Betätigungshebels (32) erstrecken,
wobei die Schwenkbewegung des Betätigungshebels (32) um eine parallel zur Längsrichtung (I) der Lagerschultern (62) verlaufende Lagerachse (L, L') erfolgt.

9. Ventilvorrichtung nach Anspruch 8, **dadurch gekennzeichnet, daß** die Schwenkbewegung abhängig von der Bewegungsrichtung um eine von zwei räumlich fixierten Lagerachsen (L') erfolgt.

10. Ventilvorrichtung nach Anspruch 8, **dadurch gekennzeichnet, daß** die Lagerschultern (62) durch konvex gekrümmte Flächen gebildet werden, die sich an zugeordneten Gegenflächen (78) im Lagerbereich (64') des Gehäuses (12a, 12b) abstützen.

11. Ventilvorrichtung nach Anspruch 10, **dadurch gekennzeichnet, daß** die Schwenkbewegung um eine räumlich fixierte Lagerachse (L) erfolgt.

12. Ventilvorrichtung nach einem der vorhergehenden Ansprüche, **dadurch gekennzeichnet, daß** der Dichtkörper (26) in Richtung der räumlichen Ausdehnung des Hebels (32) im Gehäuse (12a, 12b) eingespannt ist.

13. Ventilvorrichtung nach einem der vorhergehenden Ansprüche, **dadurch gekennzeichnet, daß** der Dichtkörper (26) auf seiner dem Ventilraum (14) zugewandten Seite (38) zu beiden Seiten des Schließkörpers (28) Ausnehmungen (40) aufweist.

14. Ventilvorrichtung nach einem der vorhergehenden Ansprüche, **dadurch gekennzeichnet, daß** ihre maximale Breite in Richtung der Lagerachse (L, L') 4,5 mm beträgt.

15. Ventilvorrichtung, mit
einem in einem Gehäuse (12a, 12b) ausgebildeten Ventilraum (14),
einem gegenüber dem Ventilraum (14) mittels eines Dichtkörpers (26) aus elastischem Material abgedichteten Ventilantrieb (16),
einem zweiarmigen Betätigungshebel (32), der den Dichtkörper (26) durchragt und dessen erster Arm (34) an den Ventilantrieb (16) angeschlossen ist, und
einem an den Dichtkörper (26) angeformten Schließkörper (28), der eine Ummantelung des zweiten Arms (30) des Betätigungshebels (32) bildet,
wobei der Schließkörper (28) durch eine Schwenkbewegung des Betätigungshebels (32) einen im Ventilraum (14) angeordneten Ventilsitz (24) abdecken bzw. freigeben kann, und wobei
der Betätigungshebel (32) eine räumlich fixierte Lagerachse (L) aufweist,
**dadurch gekennzeichnet, daß** der Dichtkörper (26) auf der dem Ventilantrieb (16) zugewandten Seite (42) wenigstens ein Formschlußelement aufweist, das mit einem komplementär ausgebildeten Formschlußelement des Gehäuses (12a, 12b) in Eingriff steht, wobei das Formschlußelement längs oder parallel der Lagerachse (L) verläuft.

16. Ventilvorrichtung nach einem der vorhergehenden Ansprüche, **dadurch gekennzeichnet, daß** der Dichtkörper (26) im Bereich der Lagerachse (L) mehrere Ausnehmungen aufweist.

17. Ventilvorrichtung nach Anspruch 16, **dadurch gekennzeichnet, daß** es sich bei den Ausnehmungen um Gräben (52) handelt, die auf der dem Ventilraum (14) abgewandten Seite (42) des Dichtkörpers (26) beidseitig parallel zur Lagerachse (L) verlaufen.

18. Ventilvorrichtung nach Anspruch 16 oder Anspruch 17, **dadurch gekennzeichnet, daß** es sich bei den Ausnehmungen um Vertiefungen (54) handelt, die auf der dem Ventilraum (14) abgewandten Seite (42) des Dichtkörpers (26) zu beiden Seiten der Lagerachse (L) angeordnet sind.

19. Ventilvorrichtung nach einem der vorhergehenden Ansprüche, **dadurch gekennzeichnet, daß** der Dichtkörper (26) an zwei einander gegenüberliegenden Seiten (56), die die Lagerachse (L) schneiden, Einbuchtungen (58) aufweist, die sich über die gesamte Dicke (D) des Dichtkörpers (26) erstrecken.

20. Ventilvorrichtung nach einem der vorhergehenden Ansprüche, **dadurch gekennzeichnet, daß** der Dichtkörper (26) im Bereich der Lagerachse (L) wenigstens eine Verdickung aufweist.

21. Ventilvorrichtung nach Anspruch 20, **dadurch gekennzeichnet, daß** die Verdickung ein vom Betätigungshebel (32) unterbrochener Wulst (44) ist, der auf der dem Ventilraum (14) abgewandten Seite (42) des Dichtkörpers (26) längs der Lagerachse (L) verläuft.

22. Ventilvorrichtung nach Anspruch 20 oder Anspruch 21, **dadurch gekennzeichnet, daß** zwei Wülste (48) vorgesehen sind, die auf der dem Ventilraum (14) abgewandten Seite (42) des Dichtkörpers (26) beidseitig parallel zur Lagerachse (L) verlaufen.

23. Ventilvorrichtung nach einem der Ansprüche 20 bis 22, **dadurch gekennzeichnet, daß** mehrere Noppen (50) vorgesehen sind, die auf der dem Ventilraum (14) abgewandten Seite (42) des Dichtkörpers (26) zu beiden Seiten der Lagerachse (L) angeordnet sind.

## Claims

1. A valve device, comprising
a valve space (14) formed in a housing (12a, 12b),
a valve drive (16) sealed against the valve space (14) by means of a sealing body (26) made of an elastic material,
a two-armed actuating lever (32), which extends through the sealing body (26) and whose first arm (34) is connected to the valve drive (16), and
a closing body (28) molded integrally with the sealing body (26) and forming a jacket of the second arm (30) of the actuating lever (32),
the closing body (28) being adapted to cover or clear a valve seat (24) disposed in the valve space (14) by a swivel movement of the actuating lever (32),
the actuating lever (32) having a spatially fixed bearing axis (L),
**characterized in that** a bearing surface (64) on the housing (12a, 12b) and two bearing shoulders (62) formed at the transition region of the lever arms (30, 34) are provided, which are free of the jacket and supported directly on the bearing surface (64) of the housing (12a, 12b).

2. The valve device according to claim 1, **characterized in that** the bearing shoulders (62) are steps and, compared with the second arm (30), the first arm (34) of the actuating lever (32) has a width (B) reduced by the steps.

3. The valve device according to claim 2, **characterized in that** the steps are supported on the bearing surface (64) of the housing (12a, 12b) substantially in a line shape.

4. The valve device according to any of claims 1 to 3, **characterized in that** the first arm (34) of the actuating lever (32) is tapered from the bearing shoulders (62) towards its free end.

5. The valve device according to any of the preceding claims, **characterized in that** on its free end, the first arm (34) of the actuating lever (32) includes a formation for coupling of the valve drive (16).

6. The valve device according to claim 5, **characterized in that** the formation forms no broadening of the first lever arm (34).

7. The valve device according to claim 5 or 6, **characterized in that** the formation is formed by at least one of the following elements:
- integrally molded projection (68),
- indentation (70),
- internal recess (72).

8. The valve device according to claim 1, **characterized in that**
the two bearing shoulders (62) formed at the transition region of the lever arms (30, 34) extend in their longitudinal direction (I) substantially over the entire width (B) of the actuating lever (32),
the swivel movement of the actuating lever (32) occurring about a bearing axis (L, L') extending parallel to the longitudinal direction (I) of the bearing shoulders (62).

9. The valve device according to claim 8, **characterized in that** the swivel movement occurs about one of two spatially fixed bearing axes (L'), depending on the direction of movement.

10. The valve device according to claim 8, **characterized in that** the bearing shoulders (62) are formed by convexly curved surfaces, which support on associated mating surfaces (78) in the bearing portion (64') of the housing (12a, 12b).

11. The valve device according to claim 10, **characterized in that** the swivel movement occurs about a spatially fixed bearing axis (L).

12. The valve device according to any of the preceding claims, **characterized in that** the sealing body (26) is clamped in the housing (12a, 12b) in the direction of the spatial extent of the lever (32).

13. The valve device according to any of the preceding claims, **characterized in that** on its side (38) facing the valve space (14), the sealing body (26) has recesses (40) on both sides of the closing body (28).

14. The valve device according to any of the preceding claims, **characterized in that** its maximum width in the direction of the bearing axis (L, L') is 4.5 mm.

15. A valve device, comprising
a valve space (14) formed in a housing (12a, 12b),
a valve drive (16) sealed against the valve space (14) by means of a sealing body (26) made of an elastic material,
a two-armed actuating lever (32), which extends through the sealing body (26) and whose first arm (34) is connected to the valve drive (16), and
a closing body (28) molded integrally with the sealing body (26) and forming a jacket of the second arm (30) of the actuating lever (32),
the closing body (28) being adapted to cover or clear a valve seat (24) disposed in the valve space (14) by a swivel movement of the actuating lever (32), and
the actuating lever (32) having a spatially fixed bearing axis (L),
**characterized in that** on the side (42) facing the valve drive (16), the sealing body (26) includes at least one form-fitting element, which is in engagement with a complementarily formed form-fitting element of the housing (12a, 12b), the form-fitting element extending along or parallel to the bearing axis (L).

16. The valve device according to any of the preceding claims, **characterized in that** the sealing body (26) includes a plurality of recesses in the region of the bearing axis (L).

17. The valve device according to claim 16, **characterized in that** the recesses are trenches (52), which on the side (42) of the sealing body (26) facing away from the valve space (14) extend parallel to the bearing axis (L) on both sides.

18. The valve device according to claim 16 or claim 17, **characterized in that** the recesses are depressions (54), which are arranged on the side (42) of the sealing body (26) facing away from the valve space (14) on both sides of the bearing axis (L).

19. The valve device according to any of the preceding claims, **characterized in that** on two opposed sides (56), which intersect the bearing axis (L), the sealing body (26) has indentations (58) which extend over the entire thickness (D) of the sealing body (26).

20. The valve device according to any of the preceding claims, **characterized in that** the sealing body (26) has at least one thickened portion in the region of the bearing axis (L).

21. The valve device according to claim 20, **characterized in that** the thickened portion is a bead (44) which is interrupted by the actuating lever (32) and which on the side (42) of the sealing body (26) facing away from the valve space (14) extends along the bearing axis (L).

22. The valve device according to claim 20 or claim 21, **characterized in that** two beads (48) are provided, which on the side (42) of the sealing body (26) facing away from the valve space (14) extend parallel to the bearing axis (L) on both sides.

23. The valve device according to any of claims 20 to 22, **characterized in that** a plurality of knobs (50) are provided, which on the side (42) of the sealing body (26) facing away from the valve space (14) are arranged on both sides of the bearing axis (L).

## Revendications

1. Dispositif de soupape, comportant
une chambre de soupape (14) réalisée dans un boîtier (12a, 12b),
un entraînement de soupape (16) étanché par rapport à la chambre de soupape (14) au moyen d'un corps d'étanchéité (26) en matériau élastique,
un levier d'actionnement (32) à deux bras qui traverse le corps d'étanchéité (26) et dont le premier bras (34) est raccordé à l'entraînement de soupape (16) et
un corps de fermeture (28) conformé sur le corps d'étanchéité (26), qui forme une enveloppe du deuxième bras (30) du levier d'actionnement (32),
le corps de fermeture (28) pouvant, par un mouvement de pivotement du levier d'actionnement (32), recouvrir ou libérer un siège de soupape (24) agencé dans la chambre de soupape (14),
le levier d'actionnement (32) présentant un axe de palier (L) fixé dans l'espace,
**caractérisé en ce qu'**il est prévu une surface de palier (64) formée sur le boîtier (12a, 12b) et deux épaulements de palier (62) formés sur la zone de transition des bras de levier (30, 34), qui sont libres par rapport à l'enveloppe et qui prennent appui directement sur la surface de palier (64) du boîtier (12a, 12b).

2. Dispositif de soupape selon la revendication 1, **caractérisé en ce que** les épaulements de palier (62) sont des gradins, et le premier bras (34) du levier d'actionnement (32) présente une largeur (B) réduite de celle des gradins par rapport au deuxième bras (30).

3. Dispositif de soupape selon la revendication 2, **caractérisé en ce que** les gradins sont montés sensiblement en forme de lignes sur la surface de palier (64) du boîtier (12a, 12b).

4. Dispositif de soupape selon l'une des revendications 1 à 3, **caractérisé en ce que** le premier bras (34) du levier d'actionnement (32) se rétrécit en partant des épaulements de palier (62) vers son extrémité libre.

5. Dispositif de soupape selon l'une quelconque des revendications précédentes, **caractérisé en ce que** le premier bras (34) du levier d'actionnement (32) présente à son extrémité libre une configuration pour l'accouplement de l'entraînement de soupape (16).

6. Dispositif de soupape selon la revendication 5, **caractérisé en ce que** la configuration ne forme pas d'élargissement du premier bras de levier (34).

7. Dispositif de soupape selon la revendication 5 ou 6, **caractérisé en ce que** la configuration est formée par au moins un des éléments suivants :
- un prolongement (68) moulé,
- un creux (70),
- un dégagement (72) situé à l'intérieur.

8. Dispositif de soupape selon la revendication 1, **caractérisé en ce que**
les deux épaulements de palier (62) formés sur la zone de transition des bras de levier (30, 34) s'étendent dans leur direction longitudinale (I) sensiblement sur toute la largeur (B) du levier d'actionnement (32),
le mouvement de pivotement du levier d'actionnement (32) ayant lieu autour d'un axe de palier (L, L') s'étendant parallèlement à la direction longitudinale (I) des épaulements de palier (62).

9. Dispositif de soupape selon la revendication 8, **caractérisé en ce que** le mouvement de pivotement a lieu en fonction de la direction de mouvement autour d'un de deux paliers (L') fixés dans l'espace,.

10. Dispositif de soupape selon la revendication 8, **caractérisé en ce que** les épaulements de palier (62) sont formés par des surfaces curvilignes convexes qui prennent appui sur des surfaces antagonistes (78) associées dans la zone de palier (64') du boîtier (12a, 12b).

11. Dispositif de soupape selon la revendication 10, **caractérisé en ce que** le mouvement de pivotement a lieu autour d'un axe de palier (L) fixé dans l'espace.

12. Dispositif de soupape selon l'une quelconque des revendications précédentes, **caractérisé en ce que** le corps d'étanchéité (26) est serré en direction de l'extension spatiale du levier (32) dans le boîtier (12a, 12b).

13. Dispositif de soupape selon l'une quelconque des revendications précédentes, **caractérisé en ce que** le corps d'étanchéité (26) présente, sur sa face (38) tournée vers la chambre de soupape (14), des évidements (40) des deux côtés du corps de fermeture (28).

14. Dispositif de soupape selon l'une quelconque des revendications précédentes, **caractérisé en ce que** sa largeur maximum en direction de l'axe de palier (L, L') est de 4,5 mm.

15. Dispositif de soupape, comportant
une chambre de soupape (14) réalisée dans un boîtier (12a, 12b),
un entraînement de soupape (16) étanché par rapport à la chambre de soupape (14) au moyen d'un corps d'étanchéité (26) en matériau élastique,
un levier d'actionnement (32) à deux bras qui traverse le corps d'étanchéité (26) et dont le premier bras (34) est raccordé à l'entraînement de soupape (16) et
un corps de fermeture (28) conformé sur le corps d'étanchéité (26), qui forme une enveloppe du deuxième bras (30) du levier d'actionnement (32),
le corps de fermeture (28) pouvant, par un mouvement de pivotement du levier d'actionnement (32), recouvrir ou libérer un siège de soupape (24) agencé dans la chambre de soupape (14), et
le levier d'actionnement (32) présentant un axe de palier (L) fixé dans l'espace,
**caractérisé en ce que** le corps d'étanchéité (26) présente sur la face (42) tournée vers l'entraînement de soupape (16) au moins un élément de coopération de formes qui est en engagement avec un élément de coopération de formes du boîtier (12a, 12b), réalisé complémentaire, l'élément de coopération de formes s'étendant le long ou parallèlement à l'axe de palier (L).

16. Dispositif de soupape selon l'une quelconque des revendications précédentes, **caractérisé en ce que** le corps d'étanchéité (26) présente plusieurs évidements dans la zone de l'axe de palier (L).

17. Dispositif de soupape selon la revendication 16, **caractérisé en ce que** les évidements sont des rainures (52) qui s'étendent de chaque côté parallèlement à l'axe de palier (L), sur la face (42) du corps d'étanchéité (26) qui est détournée de la chambre de soupape (14).

18. Dispositif de soupape selon la revendication 16 ou la revendication 17, **caractérisé en ce que** les évidements sont des renfoncements (54) qui sont agencés des deux côtés de l'axe de palier (L) sur la face (42) du corps d'étanchéité (26) qui est détournée de la chambre de soupape (14).

19. Dispositif de soupape selon l'une quelconque des revendications précédentes, **caractérisé en ce que** le corps d'étanchéité (26) présente, sur deux côtés (56) qui se font face et qui coupent l'axe de palier (L), des creux (58) qui s'étendent sur toute l'épaisseur (D) du corps d'étanchéité (26).

20. Dispositif de soupape selon l'une quelconque des revendications précédentes, **caractérisé en ce que** le corps d'étanchéité (26) présente au moins un renflement dans la zone de l'axe de palier (L).

21. Dispositif de soupape selon la revendication 20, **caractérisé en ce que** le renflement est un bourrelet (44) interrompu par le levier d'actionnement (32), lequel s'étend sur la face (42) du corps d'étanchéité (26) qui est détournée de la chambre de soupape (14), le long de l'axe de palier (L).

22. Dispositif de soupape selon la revendication 20 ou la revendication 21, **caractérisé en ce qu'**il est prévu deux bourrelets (48) qui s'étendent de chaque côté parallèlement à l'axe de palier (L), sur la face (42) du corps d'étanchéité (26) qui est détournée de la chambre de soupape (14).

23. Dispositif de soupape selon l'une des revendications 20 à 22, **caractérisé en ce qu'**il est prévu plusieurs boutons (50) qui sont agencés des deux côtés de l'axe de palier (L) sur la face (42) du corps d'étanchéité (26) qui est détournée de la chambre de soupape (14).
